(19) Europäisches Patentamt / European Patent Office / Office européen des brevets

(11) **EP 4 604 247 A1**

(12) **EUROPEAN PATENT APPLICATION**
published in accordance with Art. 153(4) EPC

(43) Date of publication:
**20.08.2025 Bulletin 2025/34**

(21) Application number: **23918595.2**

(22) Date of filing: **14.12.2023**

(51) International Patent Classification (IPC):
*H01M 10/0562* (2010.01)    *H01M 4/62* (2006.01)
*H01M 4/131* (2010.01)    *H01M 4/505* (2010.01)
*H01M 4/525* (2010.01)    *H01M 10/052* (2010.01)
*H01M 10/058* (2010.01)

(52) Cooperative Patent Classification (CPC):
**H01M 4/131; H01M 4/505; H01M 4/525;
H01M 4/62; H01M 10/052; H01M 10/0562;
H01M 10/058**

(86) International application number:
**PCT/JP2023/044824**

(87) International publication number:
**WO 2024/157640 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.01.2023 JP 2023008165**

(71) Applicant: **Murata Manufacturing Co., Ltd.
Nagaokakyo-shi, Kyoto 617-8555 (JP)**

(72) Inventors:
• **TAKAHARA, Katsunori**
**Nagaokakyo-shi, Kyoto 617-8555 (JP)**
• **TAKANO, Ryohei**
**Nagaokakyo-shi, Kyoto 617-8555 (JP)**

(74) Representative: **Reddie & Grose LLP
The White Chapel Building
10 Whitechapel High Street
London E1 8QS (GB)**

(54) **SOLID-STATE BATTERY**

(57)    The present invention provides a solid-state battery that more sufficiently suppresses an increase in interface resistance and a decrease in discharge capacity due to the use in a high-temperature environment. The present invention relates to a solid-state battery including: a positive electrode layer; a negative electrode layer; and a solid electrolyte layer disposed between the positive electrode layer and the negative electrode layer, in which the positive electrode layer includes a positive electrode active material having a layered rock salt type structure and an oxide having a garnet type structure, the positive electrode active material contains at least one of Mg (magnesium) or Al (aluminum), and the oxide does not contain Al (aluminum).

EP 4 604 247 A1

**Description**

TECHNICAL FIELD

The present invention relates to a solid-state battery.

BACKGROUND ART

In recent years, the demand is greatly increasing for batteries as power supplies for portable electronic devices such as mobile phones and portable personal computers. As batteries for such use, sintered-type solid-state secondary batteries (so-called "solid-state batteries") have been developed in which a solid electrolyte is used as an electrolyte and another constituent element is also a solid. In particular, the solid-state battery is expected to be used at a high temperature, at which a liquid secondary battery having an electrolyte of a liquid is difficult to use.

As a solid-state battery, for example, a solid-state battery having a positive electrode layer containing lithium cobalt oxide (LCO) as a positive electrode active material and garnet type oxide (for example, a so-called LLZ such as $Li_7La_3Zr_2O_{12}$) as a solid electrolyte in combination has been reported (Patent Documents 1 and 2).

PRIOR ART DOCUMENTS

PATENT DOCUMENTS

Patent Document 1: WO 18/025649
Patent Document 2: Japanese Patent Application Laid-Open No. 2021-174682

SUMMARY OF THE INVENTION

Problem to be solved by the invention

The inventor of the present invention has found that the following problems occur in a solid-state battery using the conventional positive electrode layer as described above. When the high temperature float test (for example, 60°C) was performed and the solid-state battery was placed under a high-temperature environment such as a case where the solid-state battery was always fully charged, interface resistance between the LCO and the garnet type oxide remarkably increased and/or discharge capacity remarkably decreased.

An object of the present invention is to provide a solid-state battery that more sufficiently suppresses an increase in interface resistance and a decrease in discharge capacity in a high-temperature environment.

Means for solving the problem

The present invention is based on the finding that there is a composition capable of significantly suppressing deterioration of cell characteristics in a high-temperature environment by diligently investigating the respective compositions of LCO and the garnet type oxide in the positive electrode layer.

The present invention relates to a solid-state battery including:

a positive electrode layer;
a negative electrode layer; and
a solid electrolyte layer disposed between the positive electrode layer and the negative electrode layer, in which
the positive electrode layer includes a positive electrode active material having a layered rock salt type structure and an oxide having a garnet type structure,
the positive electrode active material contains at least one of Mg (magnesium) or Al (aluminum), and
the oxide does not contain Al (aluminum).

Advantageous effect of the invention

The solid-state battery according to the present invention can more sufficiently suppress a decrease in the discharge capacity in a high-temperature environment.

BRIEF EXPLANATION OF DRAWINGS

FIG. 1 shows a schematic sectional view showing one embodiment of the relationship between the positive electrode active material and the garnet type oxide in the positive electrode layer of the solid-state battery according to the present invention.

FIG. 2 is a graph for describing a "size of an arc" for calculating an interface resistance increase rate in examples.

FIG. 3A is a TEM photograph (left side) of a sample of Example 2 in the vicinity of an interface between a positive electrode active material and a garnet type oxide and a TEM photograph (right side) showing Mg distribution mapping thereof.

FIG. 3B shows a measurement result when Mg element is measured from an interface between the positive electrode active material and the garnet type oxide toward the inside of the positive electrode active material in the left side TEM photograph of FIG. 3A.

FIG. 4A is a TEM photograph (left side) of a sample of Example 4 in the vicinity of an interface between a positive electrode active material and a garnet type oxide and a TEM photograph (right side) showing Al distribution mapping thereof.

FIG. 4B shows a measurement result when Al element is measured from an interface between the positive electrode active material and the garnet type oxide toward the inside of the positive electrode active material in the left side TEM photograph of FIG. 4A.

MODE FOR CARRYING OUT THE INVENTION

[Solid-state battery]

The present invention provides a solid-state battery. The "solid-state battery" in the present specification refers to a battery whose constituent elements (especially electrolyte layers) are formed of solids in a broad sense and refers to an "all-solid-state battery" whose constituent elements (especially all constituent elements) are formed of solids in a narrow sense. The "solid-state battery" in the present specification encompasses a so-called "secondary battery", which can be repeatedly charged and discharged, and a "primary battery", which can only be discharged. The "solid-state battery" is preferably a "secondary battery". The "secondary battery" is not excessively limited by its name but may include, for example, an electrochemical device such as a "electric storage device".

The solid-state battery of the present invention includes a positive electrode layer, a negative electrode layer, and a solid electrolyte layer, and typically has a stacked structure in which the solid electrolyte layer is disposed between the positive electrode layer and the negative electrode layer. Each of the positive electrode layer and the negative electrode layer may be stacked in two or more layers as long as a solid electrolyte layer is provided therebetween. The solid electrolyte layer is in contact with and sandwiched between the positive electrode layer and the negative electrode layer. The positive electrode layer and the solid electrolyte layer may be integrally sintered with each other to form integrally sintered bodies, and/or the negative electrode layer and the solid electrolyte layer may be integrally sintered with each other to form integrally sintered bodies. Being integrally sintered with each other to form integrally sintered bodies means that two or more members (in particular, layers) adjacent to or in contact with each other are joined by sintering. Herein, the two or more members (in particular, layers) may be integrally sintered while they are sintered bodies. The solid-state battery of the present invention may be referred to as a "sintered solid-state battery" or a "co-sintered solid-state battery" in the sense that the positive electrode layer and the solid electrolyte layer have sintered bodies sintered integrally with each other, and the negative electrode layer and the solid electrolyte layer have sintered bodies sintered integrally with each other.

(Positive electrode layer)

In the solid-state battery according to the present invention, specifically, the positive electrode layer contains a positive electrode active material having a layered rock salt type structure and containing at least one of Mg (magnesium) and Al (aluminum), and an oxide having a garnet type crystal structure and not containing Al (aluminum). In the present invention, the positive electrode layer contains the specific positive electrode active material and the specific garnet type oxide in combination, thereby allowing a decrease in discharge capacity to be more sufficiently suppressed while an increase in interface resistance is more sufficiently suppressed between the positive electrode active material and the garnet type oxide. The positive electrode layer may have a form of a sintered body containing specific positive electrode active material particles and specific garnet type oxide particles. The positive electrode layer may be a layer capable of occluding and releasing or inserting and extracting ions (particularly lithium ions). Mediating ions of the positive electrode layer are not particularly limited as long as charge and discharge can be performed, and examples thereof include lithium ions and sodium ions (particularly, lithium ions).

First, the positive electrode active material and the garnet type oxide contained in the positive electrode layer will be sequentially described in detail.

The positive electrode active material is a lithium transition metal composite oxide having a layered rock salt type structure and containing at least one of Mg (magnesium) and Al (aluminum). For example, when the positive electrode layer contains a positive electrode active material having a layered rock salt type structure and containing none of Mg (magnesium) and Al (aluminum) instead of such a specific positive electrode active material, an increase in interface resistance and a decrease in discharge capacity cannot be sufficiently suppressed. In addition, for example, when the positive electrode layer contains a positive electrode active material having another crystal structure (for example, a NASICON type structure, an olivine type structure, or a spinel type structure) instead of such a specific positive electrode active material, the positive electrode active material contains at least one of Mg and Al, failing to sufficiently suppress an increase in interface resistance and/or a decrease in discharge capacity.

The lithium transition metal composite oxide having the layered rock salt type structure means that the lithium transition metal composite oxide (particularly, particles thereof) has a layered rock salt type crystal structure, and in a broad sense, it means that the positive electrode active material has a crystal structure that can be recognized as the layered rock salt type crystal structure by a person skilled in the art of batteries. In a narrow sense, the positive electrode active material having the layered rock salt type structure means that the lithium transition metal composite oxide (particularly, particles thereof) is identified to have the layered rock salt type crystal structure by analyzing an X-ray diffraction pattern by Rietveld analysis and the like. More specifically, the oxide can show, at a predetermined incident angle, one or more main peaks corresponding to a Miller index unique to a so-called layered rock salt type crystal structure (diffraction pattern: ICDD Card No. 01-070-2685) in X-ray diffraction. The lithium transition metal composite oxide is a generic term for oxides containing lithium and one or two or more types of transition metal elements (particularly Co (cobalt)) as constituent elements.

The positive electrode active material containing at least one of Mg (magnesium) and Al (aluminum) means that the lithium transition metal composite oxide as the positive electrode active material contains one of Mg or Al or contains both of Mg and Al. The content of Mg and/or Al is not particularly limited as long as the effect of the present invention can be obtained, and for example, when the positive electrode active material is represented by a general formula (R) described later, the content may be such that $\gamma$ (particularly $\gamma_{Al}$) falls within the range described later, or the content may be such that the total concentration $C_N$ of Mg and Al inside the particles of the positive electrode active material described later falls within the range described later.

The positive electrode active material (particularly, the lithium transition metal composite oxide) has, for example, a chemical composition represented by the following general formula (R).
[Chemical Formula 1]

$$Li_\alpha M1_\beta M2_\gamma O_\omega \qquad (R)$$

In the formula (R), M1 is one or more elements selected from the group consisting of Co (cobalt), Ni (nickel), and Mn (manganese), and from the viewpoint of more sufficiently suppressing an increase in interface resistance and a decrease in discharge capacity, M1 preferably contains Co, and more preferably contains Co singly.

M2 contains one or more elements selected from the group consisting of Mg (magnesium) and Al (aluminum), and preferably contains Al, more preferably contains both Mg and Al, and more preferably contains only both Mg and Al, from the viewpoint of more sufficiently suppressing an increase in interface resistance and a decrease in discharge capacity. M1 may contain another element in addition to Mg and Al. Examples of such another element include Ti (titanium).

In the formula (R), $\alpha$ satisfies $0.8 \le \alpha \le 1.5$, and from the viewpoint of more sufficiently suppressing an increase in interface resistance and a decrease in discharge capacity, $\alpha$ preferably satisfies $0.8 \le \alpha \le 1.2$, more preferably satisfies $0.9 \le \alpha \le 1.1$, and may be further preferably 1.0.

$\beta$ satisfies $0.8 \le \beta \le 1.2$, and from the viewpoint of more sufficiently suppressing an increase in interface resistance and a decrease in discharge capacity, preferably satisfies $0.8 \le \beta \le 1.1$, more preferably satisfies $0.88 \le \beta \le 1.0$, further preferably satisfies $0.94 \le \beta \le 0.99$, sufficiently preferably satisfies $0.94 \le \beta \le 0.985$, and more sufficiently preferably satisfies $0.975 \le \beta \le 0.985$. When M1 includes a plurality of elements, the sum of values corresponding to $\beta$ for each of the elements may satisfy the above range of $\beta$. For example, a value corresponding to $\beta$ for Co is represented as $\beta_{Co}$. In addition, for example, a value corresponding to $\beta$ for Ni is represented as $\beta_{Ni}$. In addition, for example, the value corresponding to $\beta$ for Mn is represented as $\beta_{Mn}$.

$\gamma/\beta$ satisfies $0 < \gamma/\beta \le 0.2$, and from the viewpoint of more sufficiently suppressing an increase in interface resistance and a decrease in discharge capacity, preferably satisfies $0.005 \le \gamma/\beta \le 0.15$, more preferably satisfies $0.008 \le \gamma/\beta \le 0.12$, further preferably satisfies $0.015 \le \gamma/\beta \le 0.07$, and more preferably satisfies $0.015 \le \gamma/\beta \le 0.025$.

$\gamma$ satisfies $0 < \gamma \le 0.24$, and from the viewpoint of more sufficiently suppressing an increase in interface resistance and a decrease in discharge capacity, preferably satisfies $0 < \gamma \leq 0.2$, more preferably satisfies $0 < \gamma \leq 0.1$, further preferably satisfies $0.015 \leq \gamma \leq 0.06$, and sufficiently preferably satisfies $0.015 \leq \gamma \leq 0.025$. When M2 includes a plurality of elements, the sum of values corresponding to $\gamma$ for each of the elements may satisfy the above range of $\gamma$. For example, the value corresponding to $\gamma$ for Mg is represented as $\gamma_{Mg}$. In addition, for example, a value corresponding to $\gamma$ for Al is represented as $\gamma_{Al}$. $\gamma_{Al}$ satisfies preferably $0.005 \leq \gamma_{Al} \leq 0.2$, more preferably $0.008 \leq \gamma_{Al} \leq 0.08$, and further preferably $0.008 \leq \gamma_{Al} \leq 0.015$ from the viewpoint of more sufficiently suppressing an increase in interface resistance and a decrease in discharge capacity. $\gamma_{Mg}$ satisfies preferably $0.005 \leq \gamma_{Mg} \leq 0.1$, more preferably $0.008 \leq \gamma_{Mg} \leq 0.08$, and further preferably $0.008 \leq \gamma_{Mg} \leq 0.03$ from the viewpoint of more sufficiently suppressing an increase in interface resistance and a decrease in discharge capacity.

"$\beta + \gamma$" typically satisfies $0.8 \leq \beta + \gamma \leq 1.2$, and from the viewpoint of more sufficiently suppressing an increase in interface resistance and a decrease in discharge capacity, "$\beta + \gamma$" preferably satisfies $0.9 \leq \beta + \gamma \leq 1.1$, and may be more preferably $1.0$.

$\omega$ satisfies $1.8 \leq \omega \leq 2.2$, and may preferably satisfy $1.9 \leq \omega \leq 2.1$, and more preferably be $2.0$, from the viewpoint of more sufficiently suppressing an increase in interface resistance and a decrease in discharge capacity.

Specifically, the lithium transition metal composite oxide as the positive electrode active material may be, for example, $LiCo_{0.99}Mg_{0.01}O_2$, $LiCo_{0.95}Mg_{0.05}O_2$, $LiCo_{0.98}Al_{0.02}O_2$, $LiCo_{0.95}Al_{0.05}O_2$, $LiCo_{0.9}Al_{0.1}O_2$, $LiCo_{0.98}Al_{0.01}Mg_{0.01}O_2$, and $LiCo_{0.97}Al_{0.01}Mg_{0.01}Ti_{0.01}O_2$.

The chemical composition of the positive electrode active material may be average chemical composition. The average chemical composition of the positive electrode active material means the average of the chemical composition of the positive electrode active material in the thickness direction of the positive electrode layer. The average chemical composition of the positive electrode active material can be analyzed and measured by breaking the solid-state battery and performing composition analysis by EDX using energy dispersive X-ray spectroscopy (SEM-EDX) in any field of view into which the whole positive electrode layer fits in the thickness direction. Therefore, the chemical composition of the positive electrode active material is the average chemical composition of the entire "particle interior" and "vicinity of the grain boundary".

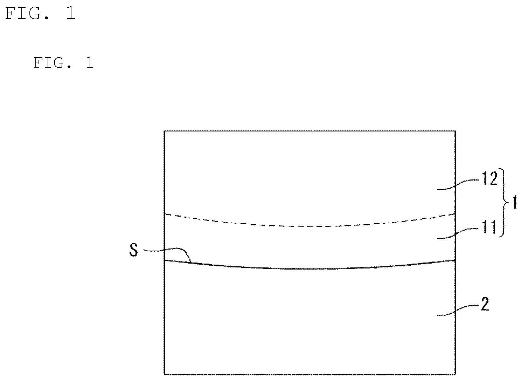

For example, as shown in FIG. 1, the positive electrode active material has a concentration gradient of Mg (magnesium) and/or Al (aluminum) between the interface vicinity 11 with the garnet type oxide 2 and the particle interior 12. Specifically, the interface vicinity 11 in the positive electrode active material is a region (in FIG. 1, a region between the interface S and the broken line) in which a distance from the interface S with the garnet type oxide 2 in the positive electrode active material 1 (that is, a distance from the interface S toward the positive electrode active material 1) is 50 nm or less in a sectional view. The interface vicinity 11 is typically disposed on an outer peripheral edge of the positive electrode active material. The particle interior 12 is an inner region surrounded by the interface vicinity 11 in a sectional view. FIG. 1 shows a schematic sectional view showing one embodiment of a relationship between the positive electrode active material and the garnet type oxide in the positive electrode layer of the solid-state battery according to the present invention.

In the positive electrode active material, specifically, the concentration of at least one of Mg (magnesium) and Al (aluminum) in the particle interior 12 is larger than the concentration of the at least one in the interface vicinity 11. The details are as follows.

When the positive electrode active material contains only Mg out of Mg and Al (hereinafter, referred to as case 1), the concentration of Mg inside the particles is larger than the concentration of Mg in the interface vicinity.

When the positive electrode active material contains only Al out of Mg and Al (hereinafter, referred to as case 2), the concentration of Al inside the particles is larger than the concentration of Al in the interface vicinity.

When the positive electrode active material contains both of Mg and Al (hereinafter, referred to as case 3), the total concentration of Mg and Al inside the particles is larger than the total concentration of Mg and Al in the interface vicinity.

The total concentration $C_N$ of Mg and Al in the particle interior 12 is larger than the total concentration $C_K$ of Mg and Al in the interface vicinity 11 from the viewpoint of more sufficiently suppressing an increase in interface resistance and a decrease in discharge capacity in any case of the cases 1 to 3.

The concentration ratio ($C_K/C_N$) of the total concentration $C_K$ to the total concentration $C_N$ is typically 0.01 or more and 0.90 or less, and from the viewpoint of more sufficiently suppressing an increase in interface resistance and a decrease in discharge capacity, the concentration ratio is preferably 0.1 or more and 0.8 or less, more preferably 0.15 or more and 0.60 or less, and further more preferably 0.30 or more and 0.60 or less.

The total concentration $C_K$ may be typically 0.1 atom% or more and 2.0 atom% or less, and is preferably 0.1 atom% or more and 1.0 atom% or less, more preferably 0.2 atom% or more and 0.8 atom% or less, further more preferably 0.5 atom% or more and 0.7 atom% or less, and sufficiently preferably 0.55 atom% or more and 0.7 atom% or less from the viewpoint of more sufficiently suppressing an increase in interface resistance and a decrease in discharge capacity.

The total concentration $C_N$ may be typically 0.8 atom% or more and 5.0 atom% or less, and is preferably 0.8 atom% or more and 4.0 atom% or less, more preferably 1.0 atom% or more and 3.0 atom% or less, and further more preferably 1.0 atom% or more and 2.0 atom% or less from the viewpoint of more sufficiently suppressing an increase in interface resistance and a decrease in discharge capacity.

As the total concentration $C_K$, an average value of values measured by TEM-EDX (energy dispersive X-ray spectroscopy) point analysis at any 30 points in the interface vicinity 11 is used.

As the total concentration $C_N$, an average value of values measured by TEM-EDX point analysis at any 30 points in the particle interior 12 is used.

The content of the layered rock salt type positive electrode active material (particularly the layered rock salt type lithium transition metal composite oxide) in the positive electrode layer is typically 20% by volume or more, particularly 20% by volume or more and 90% by volume or less with respect to the entire positive electrode layer, and from the viewpoint of more sufficiently suppressing an increase in interface resistance and a decrease in discharge capacity, the content is preferably 40 % by volume or more and 80% by volume or less, more preferably 45% by volume or more and 70% by volume or less, and particularly preferably 50% by volume. The positive electrode layer may contain two or more kinds of layered rock salt type positive electrode active materials, and in that case, the total content thereof may be within the above range. The two or more types of layered rock salt-type positive electrode active materials are, for example, two or more types of layered rock salt-type positive electrode active materials in which the types of elements M1 and/or M2 are different and/or at least one of $\alpha$, $\beta$, and $\gamma$ is different among the layered rock salt type positive electrode active materials represented by the general formula (R).

The positive electrode layer may contain a positive electrode active material (hereinafter, also referred to as "another positive electrode active material") other than the layered rock salt type positive electrode active material described above. The content of the positive electrode active material other than the layered rock salt type positive electrode active material described above is typically 10% by volume or less with respect to the entire positive electrode layer, and is preferably 5% by volume or less and more preferably 0% by volume from the viewpoint of more sufficiently suppressing an increase in interface resistance and a decrease in discharge capacity. Examples of another positive electrode active material include lithium-containing phosphate compound particles having a NASICON type structure, lithium-containing phosphate compound particles having an olivine type structure, lithium-containing layered oxide particles, and lithium-containing oxide particles having a spinel type structure.

The positive electrode active material can be produced, for example, with the following method, or can be obtained as a commercially available product. In the case of producing a positive electrode active material, first, a raw material compound containing a predetermined metal atom is weighed out so as to have a predetermined chemical composition, and water is added and mixed to obtain a slurry. Then, the slurry is dried, calcined at 700°C or higher and 1000°C or lower for 1 hour or longer and 30 hours or shorter, and pulverized, and thus a positive electrode active material can be obtained.

The chemical composition and the crystal structure of the positive electrode active material in the positive electrode layer may be usually changed by element diffusion at the time of sintering. The positive electrode active material may have the chemical composition and the crystal structure described above in the solid-state battery after being sintered together with the negative electrode layer and the solid electrolyte layer.

The average particle size of the positive electrode active material is not particularly limited, and may be, for example, 100 nm or more and 10 $\mu$m or less, and is preferably 500 nm or more and 8 $\mu$m or less, more preferably 1 $\mu$m or more and 5 $\mu$m or less, and sufficiently preferably 1 $\mu$m or more and 3 $\mu$m or less, from the viewpoint of more sufficiently suppressing an increase in interface resistance and a decrease in discharge capacity. The average particle size of the positive electrode active material is typically larger than the average particle size of the garnet type oxide described later.

The average particle size (arithmetic average) of the positive electrode active material can be determined by, for example, randomly selecting 10 or more and 100 or less particles from a SEM image, and simply averaging the particle sizes thereof.

The particle size is the diameter of a spherical particle when the particle is assumed to be a perfect sphere. Such a particle size can be determined by, for example, cutting out a section of the solid-state battery, photographing a sectional SEM image using a SEM, then calculating the sectional area S of the particle using image analysis software (for example, "Azo-kun" (manufactured by Asahi Kasei Engineering Corporation)), and then determining the particle diameter R by the following formula.

[Mathematical Formula 1]

$$R = 2 \times (S / \pi)^{1/2}$$

The average particle size of the positive electrode active material in the positive electrode layer may be measured by specifying the positive electrode active material according to the composition at the time of measuring the chemical composition described above.

The average particle size of the positive electrode active material in the positive electrode layer may typically change due to sintering in the process of producing the solid-state battery. In the solid-state battery after being sintered together with the negative electrode layer and the solid electrolyte layer, the positive electrode active material may have the above-described average particle size.

The garnet type oxide is an oxide (particularly, a metal oxide) that has a garnet type crystal structure and does not substantially contain Al (aluminum). For example, when the positive electrode layer contains a garnet type oxide containing Al instead of such a specific garnet type oxide, an increase in interface resistance and a decrease in discharge capacity cannot be sufficiently suppressed. For example, when the positive electrode layer contains an oxide having another crystal structure instead of such a specific garnet type oxide, an increase in interface resistance and/or a decrease in discharge capacity cannot be sufficiently suppressed if the oxide does not contain Al.

The oxide having a garnet type crystal structure means, in an encompassing manner, that the oxide not only simply has a "garnet type crystal structure", but also has a "garnet type similar crystal structure". Specifically, the oxide has a crystal structure that can be identified as a garnet type or a garnet type similar crystal structure by those skilled in the field of solid-state batteries in X-ray diffraction. More specifically, the oxide may show, in X-ray diffraction, one or more main peaks corresponding to a Miller index unique to a so-called garnet type crystal structure (diffraction pattern: ICDD Card No. 01-080-6142) at a predetermined incident angle, or as a pseudo-garnet-type crystal structure, one or more main peaks corresponding to a Miller index unique to a so-called garnet-type crystal structure may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a garnet type include ICDD Card No. 00-045-0109.

The fact that the garnet type oxide does not substantially contain Al means that Al may be contained to such an extent that the exhibition of the effect of the present invention is not inhibited, and for example, it means that the content of Al is less than 0.08 (particularly, less than 0.01) with respect to the content of La contained in the garnet type oxide. As a result, the side reaction due to diffusion of Al from the garnet type oxide to the positive electrode layer during firing is suppressed.

As the content ratio of Al to La in the garnet type oxide, an average value of values measured by TEM-EDX point analysis at any 30 points is used. The content ratio of Al to La is a ratio based on a molar basis (that is, a molar ratio).

The garnet type oxide has, for example, a chemical composition represented by the following general formula (I).
[Chemical Formula 2]

$$(Li_{\alpha-p}A_x)(B^I_{\beta-y}B^{II}_y)(D^I_{\gamma-z}D^{II}_z)O_{\omega} \qquad (I)$$

In the formula (I), A is one or more elements that can solid-soluble in the Li site of the garnet type oxide. Specifically, A is one or more elements selected from the group (hereinafter, may be referred to as "group a") consisting of Mg (magnesium), Ga (gallium), Sc (scandium), and Fe (iron), and does not contain Al (aluminum).

$B^I$ is one or more elements selected from the group consisting of elements capable of having tervalent valency among elements belonging to Groups 1 to 3 capable of having eight-coordination with oxygen. $B^I$ is specifically one or more elements selected from the group (hereinafter may be referred to as "group bI") consisting of La (lanthanum), Y (yttrium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium). $B^I$ preferably contains La (lanthanum) from the viewpoint of more sufficiently suppressing an increase in interface resistance and a decrease in discharge capacity. $B^I$ may contain La (lanthanum) singly.

$B^{II}$ is one or more elements selected from the group consisting of elements capable of having valences other than tervalent valency among elements belonging to Groups 1 to 3 capable of having eight-coordination with oxygen. $B^{II}$ is specifically one or more elements selected from the group (hereinafter may be referred to as "group bII") consisting of Ca (calcium), Sr (strontium), and Ba (barium) as bivalent $B^{II}$, and Ce (cerium) as tetravalent $B^{II}$.

$D^I$ is one or more elements selected from the group consisting of elements capable of having tetravalent valency among transition elements and typical elements belonging to Groups 12 to 15 capable of having six-coordination with oxygen. $D^I$ is specifically one or more elements selected from the group (hereinafter may be referred to as "group dI") consisting of Zr (zirconium), Ti (titanium), Hf (hafnium, Ge (germanium), and Sn (tin). $B^I$ preferably contains Zr (zirconium) from the viewpoint of more sufficiently suppressing an increase in interface resistance and a decrease in discharge capacity. $D^I$ may contain Zr (zirconium) alone.

$D^{II}$ is one or more elements selected from the group consisting of elements capable of having valences other than tetravalent valency among transition elements and typical elements belonging to Groups 12 to 15 capable of having six-coordination with oxygen. $D^{II}$ is specifically one or more elements selected from the group (hereinafter may be referred to as "group dII") consisting of Sc (scandium) as trivalent $D^{II}$, Ta (tantalum), Nb (niobium), Sb (antimony), and Bi (bismuth) as pentavalent $D^{II}$, and Mo (molybdenum), W (tungsten), and Te (tellurium) as hexavalent $D^{II}$. $D^{II}$ is preferably one or more elements selected from the group consisting of Bi (bismuth) and Ta (tantalum), may contain more preferably Bi (bismuth), and further more preferably only Bi (bismuth) and Ta (tantalum) from the viewpoint of more sufficiently suppressing an increase in interface resistance and a decrease in discharge capacity.

In the formula (I), p is represented by the calculation formula (i):

$$p = ax - (3 - b)y + (d - 4)z \quad (i).$$

In the formula (i), a represents an average valence of A. The average valence of A is, for example, a value represented by the formula: $(n1 \times r + n2 \times s + n3 \times t)/(n1 + n2 + n3)$ when A is recognized as n1 elements X with a valence r+, n2 elements Y with a valence s+, and n3 elements Z with a valence t+.

b is an average valence of $B^{II}$. The average valence of $B^{II}$ is, for example, a value represented by the same formula as the average valence of A described above when $B^{II}$ is recognized as n1 elements X with a valence r+, n2 elements Y with a valence s+, and n3 elements Z with a valence t+.

d is the average valence of $D^{II}$; and the average valence of $D^{II}$ is, for example, a value represented by the same formula as the average valence of A described above when $D^{II}$ is recognized as n1 elements X with a valence r+, n2 elements Y with a valence s+, and n3 elements Z with a valence t+.

In the formula (I), $\alpha$ satisfies $5.0 \leq \alpha \leq 8.0$, and from the viewpoint of more sufficiently suppressing an increase in interface resistance and a decrease in discharge capacity, preferably satisfies $5.5 \leq \alpha \leq 7.5$, more preferably satisfies $5.5 \leq \alpha \leq 7.0$, further more preferably $6.0 \leq \alpha \leq 6.8$, particularly preferably $6.2 \leq \alpha \leq 6.8$, and most preferably $6.2 \leq \alpha \leq 6.6$.

$\beta$ satisfies $2.5 \leq \beta \leq 3.5$, and from the viewpoint of more sufficiently suppressing an increase in interface resistance and a decrease in discharge capacity, preferably satisfies $2.6 \leq \beta \leq 3.4$, more preferably $2.7 \leq \beta \leq 3.3$, further more preferably $2.8 \leq \beta \leq 3.2$, particularly preferably $2.9 \leq \beta \leq 3.1$, and most preferably $3.0$.

$\gamma$ satisfies $1.5 \leq \gamma \leq 2.5$, and from the viewpoint of more sufficiently suppressing an increase in interface resistance and a decrease in discharge capacity, preferably satisfies $1.6 \leq \gamma \leq 2.4$, more preferably $1.7 \leq \gamma \leq 2.3$, further more preferably $1.8 \leq \gamma \leq 2.2$, particularly preferably $1.9 \leq \gamma \leq 2.1$, and most preferably $2.0$.

$\omega$ satisfies $11 \leq \omega \leq 13$, preferably $11 \leq \omega \leq 12.5$, more preferably $11.5 \leq \omega \leq 12.5$, and further more preferably "12 - $\delta$" from the viewpoint of more sufficiently suppressing an increase in interface resistance and a decrease in discharge capacity. $\delta$ represents an oxygen deficiency amount and may be 0. $\delta$ may typically satisfy $0 \leq \delta < 1$. The oxygen deficiency amount $\delta$ cannot be quantitatively analyzed using the latest device, and therefore may be regarded as 0.

x satisfies $0 \leq x \leq 1.0$, and from the viewpoint of more sufficiently suppressing an increase in interface resistance and a decrease in discharge capacity, preferably satisfies $0 \leq x \leq 0.8$, more preferably $0 \leq x \leq 0.6$, further more preferably $0 \leq x \leq 0.4$, particularly preferably satisfies $0 \leq x \leq 0.2$, and most preferably 0. When A includes a plurality of elements, the sum of values corresponding to x for each of the elements may satisfy the above range of x.

y satisfies $0 \leq y \leq 1.0$, and from the viewpoint of more sufficiently suppressing an increase in interface resistance and a decrease in discharge capacity, preferably satisfies $0 \leq y \leq 0.8$, more preferably $0 \leq y \leq 0.6$, further more preferably $0 \leq y \leq 0.4$, particularly preferably satisfies $0 \leq y \leq 0.2$, and most preferably 0. When $B^{II}$ includes a plurality of elements, the sum of values corresponding to y for each of the elements may satisfy the above range of y.

z satisfies $0.4 \leq z \leq 2.2$, and from the viewpoint of more sufficiently suppressing an increase in interface resistance and a decrease in discharge capacity, preferably $0.4 \leq y \leq 1.5$, more preferably $0.4 \leq z \leq 1.0$, further more preferably $0.4 \leq z \leq 0.8$, particularly preferably $0.5 \leq z \leq 0.7$, and most preferably 0.6. When $D^{II}$ includes a plurality of elements, the sum of values corresponding to z for each of the elements may satisfy the above range of z.

The chemical composition of the garnet type oxide may be measured by performing quantitative analysis (composition analysis) using TEM-EDX (energy dispersive X-ray spectroscopy). Although a method of measuring the chemical composition of the garnet type oxide is not particularly limited, for example, TEM-EELS (Transmission Electron Microscope-Electron Energy-Loss Microscopy: Electron Energy-Loss Spectroscopy) measurement or the like may be performed.

From the viewpoint of more sufficiently suppressing an increase in interface resistance and a decrease in discharge capacity, the garnet type oxide preferably has a chemical composition represented by the following general formula (II). Specifically, from the viewpoint of more sufficiently suppressing an increase in interface resistance and a decrease in discharge capacity, the garnet type oxide preferably has a chemical composition represented by the following general formula (II). The general formula (II) is one embodiment included in the general formula (I).

[Chemical Formula 3]

$$(Li_{7-p})(La_3)(Zr_{2-z}D^{II}_{z})O_{\omega} \quad (II)$$

In the formula (II), $D^{II}$ is the same as $D^{II}$ in the general formula (I).

z in the formula (II) is the same as z in the general formula (I).

$\omega$ in the formula (II) is the same as $\omega$ in the general formula (I).

p in the formula (II) is represented by $p = (d - 4)z$. d is the same as d in the formula (i).

Specifically, the garnet type oxide may be, for example, $Li_{6.4}La_3(Zr_{1.4}Ta_{0.4}Bi_{0.2})O_{12}$.

The average particle size of the garnet type oxide is not particularly limited, and may be, for example, 10 nm or more and 5 $\mu$m or less, and is preferably 50 nm or more and 1 $\mu$m or less, more preferably 100 nm or more and 800 nm or less, and particularly preferably 500 nm from the viewpoint of more sufficiently suppressing an increase in interface resistance and a decrease in discharge capacity. The average particle size of the garnet type oxide can be determined in the same manner as the average particle size of the positive electrode active material described above.

The content of the garnet type oxide is typically 10% by volume or more, particularly 20% by volume or more and 80% by volume or less with respect to the entire positive electrode layer, and from the viewpoint of more sufficiently suppressing an increase in interface resistance and a decrease in discharge capacity, the content is preferably 30% by volume or more and 80% by volume or less, more preferably 30% by volume or more and 70% by volume or less, and particularly preferably 50% by volume. The positive electrode layer may contain two or more types of garnet type oxides, and in that case, the total content thereof may be within the above range. The two or more types of garnet type oxides are, for example, two or more types of garnet type oxides in which types of constituent elements are different and/or at least one of $\alpha$, $\beta$, $\gamma$, x, y, z, and p is different, among the garnet type oxides represented by the general formula (I).

The garnet type oxide can be produced by the following method. A raw material compound containing a predetermined metal atom is weighed so as to provide a predetermined chemical composition, and water is added thereto and mixed therewith to obtain a slurry. Then, the slurry is dried, calcined at 700°C or more and 1000°C or less for 1 hour or more and 30 hours or less, and pulverized, and thus a garnet type oxide can be obtained.

The positive electrode layer may contain a metal oxide (for example, a so-called solid electrolyte) (hereinafter, referred to as other metal oxide) other than the garnet type oxide, and in this case, the content of the other metal oxide is typically 10% by volume or less with respect to the entire positive electrode layer, and from the viewpoint of more sufficiently suppressing an increase in interface resistance and a decrease in discharge capacity, is preferably 5% by volume or less, and more preferably 0% by volume.

The positive electrode layer may further contain a sintering aid and/or a conductive aid.

As the sintering aid, various sintering aids known in the field of solid-state batteries can be used. The composition of such a sintering aid contains at least lithium (Li), boron (B), and oxygen (O), and the molar ratio of Li to B (Li/B) is preferably 2.0 or more. Specific examples of such a sintering aid include $Li_4B_2O_5$, $Li_3BO_3$, $(Li_{2.7}Al_{0.3})BO_3$, $Li_{2.8}(B_{0.8}C_{0.2})O_3$, and $LiBO_2$.

The content of the sintering aid is not particularly limited, and is, for example, preferably 0.1% by volume or more and 20% by volume or less, more preferably 1% by volume or more and 10% by volume or less with respect to the entire positive electrode layer.

For the conduction aid, conductive aids known in the field of solid-state batteries can be used. Examples of the conductive aids used preferably include metal materials such as Ag (silver), Au (gold), Pd (palladium), Pt (platinum), Cu (copper), Sn (tin), and Ni (nickel); and carbon materials such as acetylene black, Ketjen black, and carbon nanotubes such as Super P (registered trademark) and VGCF (registered trademark). The shape of the carbon material is not particularly limited, and a material to be used may have any shape such as a spherical shape, a plate shape, or a fibrous shape.

The content of the conductive aid is not particularly limited, and is, for example, preferably 50% by volume or less (particularly 0% by volume or more and 50% by volume or less), and more preferably 40% by volume or less (particularly 0% by volume or more and 40% by volume or less) with respect to the entire positive electrode layer.

The thickness of the positive electrode layer is typically 0.1 $\mu$m or more and 30 $\mu$m or less, and for example, preferably 1 $\mu$m or more and 20 $\mu$m or less. As the thickness of the positive electrode layer, the average of thicknesses measured at any 10 points in a SEM image is used.

In the positive electrode layer, a porosity is not particularly limited, and is preferably 20% by volume or less, more preferably 15% by volume or less, and further more preferably 10% by volume or less.

As the porosity of the positive electrode layer, a value measured from a SEM image after FIB section processing is used.

The positive electrode layer is a layer that may be referred to as a "positive electrode active material layer". The positive electrode layer may have a so-called positive electrode current collector or positive electrode current collecting layer.

(Negative electrode layer)

In the solid-state battery of the present invention, the negative electrode layer is not particularly limited. The negative electrode layer typically contains a negative electrode active material. The negative electrode layer may be a layer capable of occluding and releasing or inserting and extracting ions (particularly lithium ions). Mediating ions of the negative electrode layer are not particularly limited as long as charge and discharge can be performed, and examples thereof include lithium ions and sodium ions (particularly, lithium ions).

The negative electrode active material is not particularly limited, and a negative electrode active material known in the field of solid-state batteries can be used. Examples of the negative electrode active material include carbon materials such as graphite, graphite-lithium compounds, a lithium metal, lithium alloy particles, phosphate compounds having a NASICON type structure, Li-containing oxides having a spinel type structure, and oxides having a $\beta_{II}$-$Li_3VO_4$-type structure or a $\gamma_{II}$-$Li_3VO_4$-type structure. As the negative electrode active material, a lithium metal or a Li-containing oxide having a $\beta_{II}$-$Li_3VO_4$-type structure or a $\gamma_{II}$-$Li_3VO_4$-type structure may be used.

The fact that the oxide has a $\beta_{II}$-$Li_3VO_4$-type structure in the negative electrode layer means that the oxide (in particular, particles of the oxide) has a $\beta_{II}$-$Li_3VO_4$-type crystal structure, and in a broad sense, refers to the fact that the oxide has a crystal structure that can be identified as a $\beta_{II}$-$Li_3VO_4$-type crystal structure by those skilled in the field of solid-state batteries. In a narrow sense, the fact that the oxide has a $\beta_{II}$-$Li_3VO_4$-type structure in the negative electrode layer means that in X-ray diffraction, the oxide (in particular, particles of the oxide) shows one or more main peaks corresponding to Miller indices unique to a so-called $\beta_{II}$-$Li_3VO_4$-type crystal structure at a predetermined incident angle. Examples of a preferably used Li-containing oxide having a $\beta_{II}$-$Li_3VO_4$-type structure include $Li_3VO_4$.

The fact that the oxide has a $\gamma_{II}$-$Li_3VO_4$-type structure in the negative electrode layer means that the oxide (in particular, particles of the oxide) has a $\gamma_{II}$-$Li_3VO_4$-type crystal structure, and in a broad sense, refers to the fact that the oxide has a crystal structure that can be identified as a $\gamma_{II}$-$Li_3VO_4$-type crystal structure by those skilled in the field of solid-state batteries. In a narrow sense, the fact that the oxide has a $\gamma_{II}$-$Li_3VO_4$-type structure in the negative electrode layer means that in X-ray diffraction, the oxide (in particular, particles of the oxide) shows one or more main peaks corresponding to Miller indices unique to a so-called $\gamma_{II}$-$Li_3VO_4$-type crystal structure at a predetermined incident angle (x-axis). Examples of a preferably used Li-containing oxide having a $\gamma_{II}$-$Li_3VO_4$-type structure include $Li_{3.2}V_{0.8}Si_{0.2}O_4$.

The chemical composition of the negative electrode active material may be an average chemical composition. The average chemical composition of the negative electrode active material means the average of the chemical composition of the negative electrode active material in the thickness direction of the negative electrode layer. The average chemical composition of the negative electrode active material can be analyzed and measured by breaking the solid-state battery and performing composition analysis by EDX using energy dispersive X-ray spectroscopy (SEM-EDX) in a field of view into which the whole negative electrode layer fits in the thickness direction.

The negative electrode active material can be produced, for example, with the same method as the positive electrode active material, or can be obtained as a commercially available product.

The chemical composition and the crystal structure of the negative electrode active material in the negative electrode layer may be usually changed by element diffusion at the time of sintering in a process of producing a solid-state battery. The negative electrode active material may have the average chemical composition and the crystal structure described above in the solid-state battery after being sintered together with the positive electrode layer and the solid electrolyte layer.

The content of the negative electrode active material in the negative electrode layer is not particularly limited, and is, for example, preferably 50% or more (particularly 50% or more and 99% or less), more preferably 70% or more and 95% or less, further more preferably 80% or more and 90% or less with respect to the entire negative electrode layer.

The negative electrode layer may further contain a so-called solid electrolyte, a sintering aid and/or a conductive aid.

The solid electrolyte which may be contained in the negative electrode layer is not particularly limited, and examples thereof include a solid electrolyte exemplified as a solid electrolyte constituting a solid electrolyte layer described later.

When the negative electrode layer contains a solid electrolyte, the content of the solid electrolyte may be usually 20% by volume or more and 60% by volume or less, and particularly 30% by volume or more and 45% by volume or less with respect to the entire negative electrode layer.

As the sintering aid in the negative electrode layer, the same compound as the sintering aid in the positive electrode layer can be used.

As the conductive aid in the negative electrode layer, the same compound as the conductive aid in the positive electrode layer can be used.

The thickness of the negative electrode layer is typically 0.1 $\mu$m or more and 30 $\mu$m or less, and preferably 1 $\mu$m or more and 20 $\mu$m or less. As the thickness of the negative electrode layer, the average of thicknesses measured at any 10 points in a SEM image is used.

In the negative electrode layer, the porosity is not particularly limited, but is preferably 20% or less, more preferably 15% or less, and still more preferably 10% or less.

As the porosity of the negative electrode layer, the value measured with the same method as the porosity of the positive electrode layer is used.

The negative electrode layer is a layer that may be referred to as a "negative electrode active material layer". The negative electrode layer may have a so-called negative electrode current collector or negative electrode current collecting layer.

(Solid electrolyte layer)

In the solid-state battery of the present invention, the solid electrolyte layer contains a solid electrolyte.

The solid electrolyte contained in the solid electrolyte layer is not particularly limited, and may be any solid electrolyte contained in the solid electrolyte layer in the field of solid-state batteries. Such a solid electrolyte may be, for example, an oxide-based solid electrolyte, and examples thereof include one or more materials selected from garnet type oxides contained in the positive electrode layer, solid electrolytes having $Li_2ZrO_3$ and $\gamma\text{-}Li_3VO_4$ structures, and oxide glass ceramic-based lithium ion conductors. From the viewpoint of more sufficiently suppressing an increase in interface resistance and a decrease in discharge capacity, the solid electrolyte layer preferably contains a garnet type oxide contained in the positive electrode layer.

Examples of the solid electrolytes having a $\gamma\text{-}Li_3VO_4$ structure include solid electrolytes having an average chemical composition represented by the following general formula (III).

[Chemical Formula 4]

$$(Li_{[3-ax+\ (5-c)(1-y)]}A_x)(B_yD_{1-y})O_4 \qquad \text{(III)}$$

In the general formula (III), A represents one or more elements selected from the group consisting of Na, K, Mg, Ca, Al, Ga, Zn, Fe, Cr, and Co.

B represents one or more elements selected from the group consisting of V and P.

D represents one or more elements selected from the group consisting of Zn, Al, Ga, Si, Ge, Sn, As, Ti, Mo, W, Fe, Cr, and Co.

x satisfies $0 \le x \le 1.0$, and particularly satisfies $0 \le x \le 0.2$.

y satisfies $0 \le y \le 1.0$, and particularly satisfies $0.20 \le y \le 0.50$.

a is an average valence of A. The average valence of A is, for example, a value represented by $(n1 \times a + n2 \times b + n3 \times c) / (n1 + n2 + n3)$ when the number of elements X having a valence of a+ is n1, the number of elements Y having a valence of b+ is n2, and the number of elements Z having a valence of c+ is n3 in the elements represented by A.

c is an average valence of D. The average valence of D is, for example, the same value as the above-described average valence of A when the number of elements X having a valence of a+ is n1, the number of elements Y having a valence of b+ is n2, and the number of elements Z having a valence of c+ is n3 in the elements represented by D.

Specific examples of the solid electrolytes having a $\gamma\text{-}Li_3VO_4$ structure include $Li_{3.2}(V_{0.8}Si_{0.2})O_4$, $Li_{3.5}(V_{0.5}Ge_{0.5})O_4$, $Li_{3.4}(P_{0.6}Si0.4)O_4$, and $Li_{3.5}(P_{0.5}Ge_{0.5})O_4$.

An oxide glass ceramic-based lithium ion conductor can be used such as a phosphate compound (LATP) containing lithium, aluminum, and titanium as constituent elements or a phosphate compound (LAGP) containing lithium, aluminum, and germanium as constituent elements.

The content of the solid electrolyte in the solid electrolyte layer is not particularly limited, and is, for example, preferably 10% by volume or more and 100% by volume or less, more preferably 20% by volume or more and 100% by volume or less, and further more preferably 30% by volume or more and 100% by volume or less with respect to the entire solid electrolyte layer.

The solid electrolyte layer may further include, for example, a sintering aid and the like in addition to the solid electrolyte.

As the sintering aid in the solid electrolyte layer, the same compound as the sintering aid in the positive electrode layer can be used.

The content of the sintering aid in the solid electrolyte layer is not particularly limited, and is preferably 0% by volume or more and 20% by volume or less, and more preferably 1% by volume or more and 10% by volume or less, from the viewpoint of more sufficiently suppressing an increase in interface resistance and a decrease in discharge capacity.

The thickness of the solid electrolyte layer is typically 0.1 μm or more and 30 μm or less, and preferably 1 μm or more and 20 μm or less from the viewpoint of more sufficiently suppressing an increase in interface resistance and a decrease in discharge capacity. As the thickness of the solid electrolyte layer, the average of thicknesses measured at any 10 points in a SEM image is used.

In the solid electrolyte layer, the porosity is not particularly limited, and is preferably 20% by volume or less, more preferably 15% by volume or less, and further more preferably 10% by volume or less from the viewpoint of more sufficiently suppressing an increase in interface resistance and a decrease in discharge capacity.

As the porosity of the solid electrolyte layer, a value measured with the same method as the porosity of the positive electrode layer is used.

[Method for producing solid-state battery]

The solid-state battery can be produced, for example, with a so-called green sheet method, a printing method, or a combined method thereof.

The green sheet method will be described.

First, a paste is prepared by appropriately mixing a positive electrode active material with a garnet type oxide, a solvent, a binder, and the like. The paste is applied onto a sheet, and dried to form a first green sheet for constituting a positive electrode layer. The first green sheet may contain another so-called solid electrolyte, a conductive aid, and/or a sintering aid.

A solvent, a binder, and the like are appropriately mixed with a negative electrode active material to prepare a paste. The paste is applied onto a sheet, and dried to form a second green sheet for constituting the negative electrode layer. The second green sheet may contain a so-called solid electrolyte, a conductive aid, and/or a sintering aid.

A solvent, a binder, and the like are appropriately mixed with a solid electrolyte to prepare a paste. The paste is applied and dried to prepare a third green sheet for constituting a solid electrolyte layer. The third green sheet may contain a sintering aid and the like.

The solvent for preparation of the first to the third green sheets is not particularly limited, and for example, any solvent that can be used for producing a positive electrode layer, a negative electrode layer, or a solid electrolyte layer in the field of solid-state batteries can be used. As the solvent, the solvent in which the binder described below can be used is used. Examples of such a solvent include an alcohol such as 2-propanol.

The binder for preparation of the first to the third green sheets is not particularly limited, and for example, any binder that can be used for producing a positive electrode layer, a negative electrode layer, or a solid electrolyte layer in the field of solid-state batteries can be used. Examples of such a binder include a butyral resin and an acrylic resin.

Then, the first to the third green sheets are appropriately stacked to fabricate a stacked body. The fabricated stacked body may be pressed. Examples of a preferable pressing method include an isostatic pressing method.

Thereafter, the stacked body is sintered, for example, at 600°C or more and 800°C or less, thereby allowing a solid-state battery to be obtained.

The printing method will be described.

The printing method is the same as the green sheet method except for the following matters.

- An ink of each layer is prepared, the ink having the same composition as the composition of the paste of each layer for obtaining a green sheet except that the blending amounts of the solvent and the resin are adjusted to those suitable for use as the ink.
- The ink of each layer is printed and stacked to produce a stacked body.

Hereinafter, the present invention will be described in more detail on the basis of specific examples, but the present invention is not limited to the following examples and can be appropriately changed and implemented without changing the gist of the present invention.

The present invention as described above encompasses the following preferable aspects.

<1> A solid-state battery including:

a positive electrode layer;
a negative electrode layer; and
a solid electrolyte layer disposed between the positive electrode layer and the negative electrode layer, in which
the positive electrode layer includes a positive electrode active material having a layered rock salt type structure and an oxide having a garnet type structure,
the positive electrode active material contains at least one of Mg (magnesium) or Al (aluminum), and
the oxide does not contain Al (aluminum).

<2> The solid-state battery according to <1>, in which

the oxide contains La, and
a content of Al in the oxide with respect to a content of La (Al/La) is less than 0.08.

<3> The solid-state battery according to <1> or <2>, in which the positive electrode active material has a chemical composition represented by the following general formula (R):
[Chemical Formula 5]

$$Li_\alpha M1_\beta M2_\gamma O_\omega \qquad (R)$$

in which M1 is one or more elements selected from the group consisting of Co (cobalt), Ni (nickel), and Mn (manganese),
M2 includes one or more elements selected from the group consisting of Mg (magnesium) and Al (aluminum),
$\alpha$ satisfies $0.8 \leq \alpha \leq 1.5$,
$\beta$ satisfies $0.8 \leq \beta \leq 1.2$,
$\gamma/\beta$ satisfies $0 < \gamma/\beta \leq 0.2$, and
$\omega$ satisfies $1.8 \leq \omega \leq 2.2$.

<4> The solid-state battery according to <3>, in which

the M2 includes Al, and
a value $\gamma_{Al}$ corresponding to $\gamma$ for Al satisfies $0.008 \leq \gamma_{Al} \leq 0.08$.

<5> The solid-state battery according to <4>, in which M2 includes only both Mg and Al.
<6> The solid-state battery according to any one of <1> to <5>, in which

the positive electrode active material has an interface vicinity with the oxide and a particle interior thereof, and
a concentration of at least one of Mg (magnesium) and Al (aluminum) in the particle interior is more than a concentration of the at least one of Mg (magnesium) and Al (aluminum) in the interface vicinity.

<7> The solid-state battery according to any one of <1> to <5>, in which

the positive electrode active material has the interface vicinity with the oxide and the particle interior thereof, and
a total concentration $C_N$ of Mg (magnesium) and Al (aluminum) in the particle interior is more than a total concentration $C_K$ of Mg (magnesium) and Al (aluminum) in the interface vicinity.

<8> The solid-state battery according to <7>, in which a concentration ratio ($C_K/C_N$) of the total concentration $C_K$ to the total concentration $C_N$ is 0.01 or more and 0.90 or less.
<9> The solid-state battery according to <7> or <8>, in which

the total concentration $C_K$ is 0.1 atom% or more and 2.0 atom% or less, and
the total concentration $C_N$ is 0.8 atom% or more and 5.0 atom% or less.

<10> The solid-state battery according to any one of <1> to <9>, in which the oxide has a chemical composition represented by the following general formula (I):
[Chemical Formula 6]

$$(Li_{\alpha\_p}A_x)(B^I_{\beta-y}B^{II}_y)(D^I_{\gamma-z}D^{II}_z)O_\omega \qquad (I)$$

in which A represents one or more elements that are solid-soluble in a Li site of an oxide having a garnet type crystal structure, and does not contain Al (aluminum),
$B^I$ is one or more elements selected from the group consisting of elements capable of having a trivalent valence among elements belonging to Groups 1 to 3 capable of having an eight-coordination with oxygen,
$B^{II}$ is one or more elements selected from the group consisting of elements capable of having valences other than trivalence among elements belonging to Groups 1 to 3 capable of having eight-coordination with oxygen,
$D^I$ is one or more elements selected from the group consisting of elements capable of having tetravalent valence among transition elements capable of having six-coordination with oxygen and typical elements belonging to Groups 12 to 15,
$D^{II}$ is one or more elements selected from the group consisting of elements capable of having valences other than tetravalent among transition elements capable of having six-coordination with oxygen and typical elements belonging to Groups 12 to 15,
$\alpha$ satisfies $5.0 \leq \alpha \leq 8.0$,
$\beta$ satisfies $2.5 \leq \beta \leq 3.5$,
$\gamma$ satisfies $1.5 \leq \gamma \leq 2.5$,
$\omega$ satisfies $11 \leq \omega \leq 13$,
x satisfies $0 \leq x \leq 1.0$,
y satisfies $0 \leq y \leq 1.0$,
z satisfies $0.4 \leq z \leq 2.2$, and
p is calculated by the following formula:

$$p = ax - (3 - b)y + (d - 4)z$$

where a represents an average valence of A, b represents a mean valence of $B^{II}$, and d represents a mean valence of $D^{II}$.

<11> The solid-state battery according to <10>, in which $D^{II}$ includes Bi (bismuth).
<12> The solid-state battery according to any one of <1> to <11>, in which the positive electrode layer and the negative electrode layer are layers capable of occluding and releasing or inserting and extracting lithium ions.
<13> The solid-state battery according to any one of <1> to <11>, in which the solid electrolyte layer is integrally sintered with the positive electrode layer and the negative electrode layer by sintering between sintered bodies.

EXAMPLES

[Production of positive electrode active material]

· $LiCoO_2$ (positive electrode active material used in Comparative Example 1)

$LiCoO_2$ was synthesized from cobalt oxide $Co_3O_4$ and lithium carbonate $Li_2CO_3$. Cobalt oxide and lithium carbonate were weighed in a stoichiometric composition, sealed in a PE bottle together with zirconia beads having a diameter of 1 mm and pure water, and mixed by being rotated at 200 rpm for 16 hours in a pot mill. Thereafter, the mixture from which the beads were removed was dried and crushed in a mortar. The crushed product was put in a crucible and fired in a firing furnace at 800°C for 20 hours in an air atmosphere. The fired product thus obtained was crushed in a mortar to provide $LiCoO_2$.

· $LiCo_{0.95}Mg_{0.05}O_2$ (positive electrode active material used in Example 2)

In the synthesis of $LiCo_{0.95}Mg_{0.05}O_2$, cobalt oxide $Co_3O_4$, lithium carbonate $Li_2CO_3$, and MgO were weighed in a stoichiometric composition, sealed in a PE bottle together with zirconia beads having a diameter of 1 mm and pure water, and mixed by being rotated at 200 rpm for 16 hours in a pot mill. Thereafter, the mixture from which the beads were removed was dried and crushed in a mortar. The crushed product was put in a crucible and fired in a firing furnace at 800°C for 20 hours in an air atmosphere. The fired product thus obtained was crushed in a mortar to provide $LiCo_{0.95}Mg_{0.05}O_2$ (powder). The average particle size was 3 $\mu$m. From the XRD measurement of the powder, it was confirmed that a single phase having a layered rock salt type structure (ICDD card No. 01-070-2685) was obtained. The powder was confirmed to have no compositional deviation through ICP measurement.
Positive electrode active material other than the above chemical composition (positive electrode active material used in Examples 1 and 3 to 7 and Comparative Examples 2 to 4)
The production was performed in the same manner as the production method of $LiCo_{0.95}Mg_{0.05}O_2$ except that cobalt oxide $Co_3O_4$, lithium carbonate $Li_2CO_3$, magnesium oxide MgO, aluminum oxide $Al_2O_3$, titanium oxide $TiO_2$, iron oxide $Fe_2O_3$, and silicon dioxide $SiO_2$ were weighed and used at a desired stoichiometric composition. The average particle size of all the positive electrode active materials was 3 $\mu$m. For any positive electrode active material, it was confirmed from XRD measurement that a single phase having a layered rock salt type structure (ICDD card No. 01-070-2685) was obtained. The powder was confirmed to have no compositional deviation through ICP measurement.

[Production of garnet type oxide]

As a raw material, lithium hydroxide monohydrate $LiOH \cdot H_2O$, lanthanum hydroxide $La(OH)_3$, zirconium oxide $ZrO_2$, tantalum oxide $Ta_2O_5$, bismuth oxide $Bi_2O_3$, and aluminum oxide $Al_2O_3$ were used.
The respective raw materials were weighed so as to have the chemical composition shown in Table 1, encapsulated with the addition of water in a 100 ml polyethylene pot made of polyethylene, and rotated at 150 rpm for 16 hours on a pot rack to mix the raw materials. Lithium hydroxide monohydrate $LiOH \cdot H_2O$ as a Li source was charged in an excess of 3 wt% with respect to the target composition in consideration of Li deficiency during sintering.
The obtained slurry was evaporated and dried, and then calcined at 900°C for 5 hours to obtain a target phase.
The calcined powder obtained was, with the addition of a mixed solvent of toluene-acetone thereto, subjected to grinding for 6 hours in a planetary ball mill.
The crushed powder was dried to provide a garnet type oxide powder. It was confirmed that the garnet type oxide single substance was obtained through XRD measurement of the powder. The powder was confirmed to have no compositional deviation through ICP measurement. The average particle size was 150 nm.
In Examples, the primary particle size of the material was not changed, and the structure and composition were controlled by the molar ratio of the raw materials and the firing time.

[Production of sintering aid]

Lithium hydroxide monohydrate LiOH·H2O and boron oxide $B_2O_3$ were used. The respective starting materials were appropriately weighed such that the chemical composition of the sintering aid was $Li_4B_2O_5$, well mixed in a mortar, and then subjected to calcination at 650°C for 5 hours.

[Example 1]

[Production of positive electrode half cell]

First, the garnet type oxide, the positive electrode active material powder, and the sintering aid powder were weighed so as to have a volume ratio of 49 : 50 : 1, respectively, and kneaded with alcohol and a binder to prepare a positive electrode layer slurry, and the slurry was applied onto a sheet and dried to form the first green sheet for constituting the positive electrode layer.

The second green sheet for forming a solid electrolyte layer was formed by kneading with a garnet type oxide similar to the garnet type oxide contained in the first green sheet, an alcohol, and a binder to prepare a solid electrolyte layer slurry, and drying the solid electrolyte layer slurry.

The first and second green sheets were appropriately stacked to prepare a stacked body. The prepared stacked body was pressed by an isostatic pressing method and appropriately cut to provide a stacked body of a positive electrode layer/solid electrolyte layer. The binder was removed at 400°C, and then the sheet was subjected to press sintering at 800°C for 60 minutes under a pressure of 100 MPa to produce a co-fired body of a positive electrode layer/solid electrolyte layer. The thickness of the positive electrode layer after sintering was 15 μm, and the thickness of the solid electrolyte layer was about 200 μm.

Thereafter, metal Li as a counter electrode and a reference electrode was attached to a surface of the solid electrolyte layer on a side opposite to the positive electrode layer, and sealing with a 2032 type coin cell was performed to provide a solid-state battery.

[Examples 2 to 7 and Comparative Examples 1 to 6]

A positive electrode half cell was produced in the same manner as in Example 1 except that the garnet type oxide and the positive electrode active material shown in Table 1 were used in combination.

[Interface resistance increase rate]

The evaluation was performed based on a value (increase rate) obtained by normalizing the arc size around 1 kHz in the room temperature fully charged state after the float test at 60°C described later with the arc size around 1 kHz in the room temperature fully charged state before the float test.

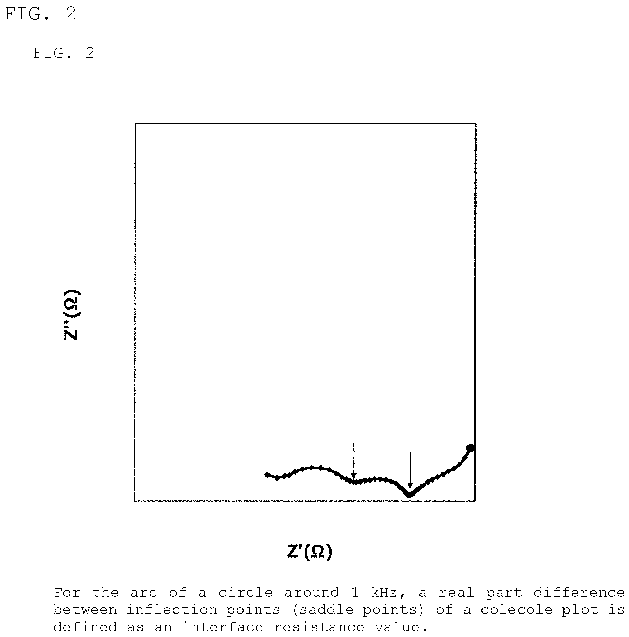

Specifically, the rate of change in interface resistance between the positive electrode active material and the solid electrolyte (the arc size around 1 kH in the "cole-cole plot") was confirmed. The arc around 1 kHz is specified from the bode diagram (absolute value of resistance vs. frequency, angle ($\theta$)) of "cole-cole plot" with real axis vs. frequency), and is set as a difference between saddle points of the arc in the real axis direction of the "cole-cole plot" diagram. (Refer to FIG. 2)

◎◎: increase rate $\leq$ 5% (best);
◎: 5% < increase rate $\leq$ 10% (excellent);
o; 10% < increase rate $\leq$ 20% (favorable);
△; 20% < increase rate $\leq$ 30% (acceptable) (no practical problem);
✕; 30% < increase rate (failure) (practical problem)

[Capacity retention rate]

The capacity retention rate was evaluated based on a normalized value (retention rate) obtained by dividing the discharge capacity at room temperature after the float test at 60°C described later by the discharge capacity at room temperature before the float test.

◎◎: 80% $\leq$ retention rate (best);
◎: 75% $\leq$ retention rate < 80% (excellent);

∘; 65% ≤ retention rate < 75% (favorable);

△; 60% ≤ retention rate < 65% (acceptable) (no practical problem);

×; retention rate < 60% (failure) (practical problem).

[Comprehensive Determination]

A comprehensive determination was performed based on the determination results of the interface resistance increase rate and the capacity retention rate.

◎◎: all the determination results were ◎◎.

◎: the lowest determination result among all the determination results was ◎.

∘: the lowest determination result among all the determination results was ∘.

△: the lowest determination result among all the determination results was △.

×: the lowest determination result among all the determination results was ×.

[Float test]

The battery was charged to 4.2 V at a constant current of 0.1 C, and after the voltage reached 4.2 V, the battery was charged at a constant voltage until the current decreased to 0.01 C. After completion of charging, the battery was brought into an open circuit state, and after waiting for 3 hours, AC impedance measurement was performed at a voltage amplitude of 10 mV in a frequency range of 0.1 Hz to 7 MHz to acquire a cole-cole plot. The condition of the AC impedance was from a frequency band of 1 MHz or more to a frequency band of 0.1 Hz or less, and the voltage amplitude was about 10 mV. After the AC impedance measurement, the battery was discharged to 3 V at a constant current of 0.1 C.

Thereafter, constant current charge was performed at 0.1 C in a thermostatic bath at 60°C, and after the battery reached 4.2 V, constant voltage charge was performed for 1 week to perform float charge. After 1 week of float charging, constant current discharge was performed at 0.1 C while the temperature was kept at 60°C, and the discharge was terminated at 3 V.

The cell was taken out from the thermostatic bath at 60°C, and the battery characteristics after float charging were confirmed at room temperature under the same initial charge-discharge characteristics. The battery was charged to 4.2 V at a constant current of 0.1 C, and after the voltage reached 4.2 V, the battery was charged at a constant voltage until the current decreased to 0.01 C. After completion of charging, the battery was brought into an open circuit state, and after waiting for 3 hours, the AC impedance was measured. After the AC impedance measurement, the battery was discharged to 3 V at a constant current of 0.1 C.

[Confirmation of element distribution]

The co-fired stacked body of the positive electrode layer/solid electrolyte layer (state before attaching the metal Li) was embedded in a resin and peeled to provide a TEM observation sample.

Composition analysis by EDX was performed using TEM-EDX (energy dispersive X-ray spectroscopy), and element distribution mapping in the vicinity of the LCO-LLZ interface was performed.

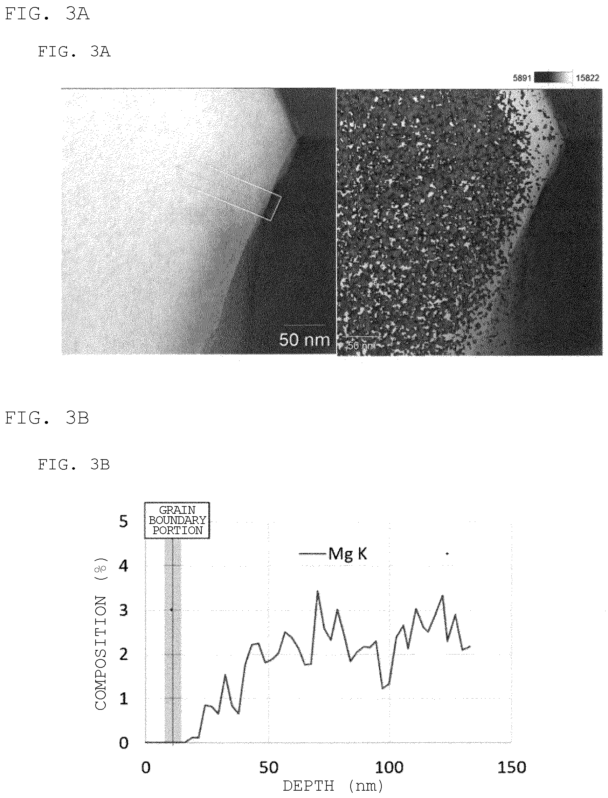

FIG. 3A is a TEM photograph (left side) of the sample of Example 2 in the vicinity of the LCO-LLZ interface and a TEM photograph (right side) showing the Mg distribution mapping thereof.

FIG. 3B shows the measurement results when the Mg element was measured from the LCO-LLZ interface toward the inside of the LCO in the left-side TEM photograph of FIG. 3A.

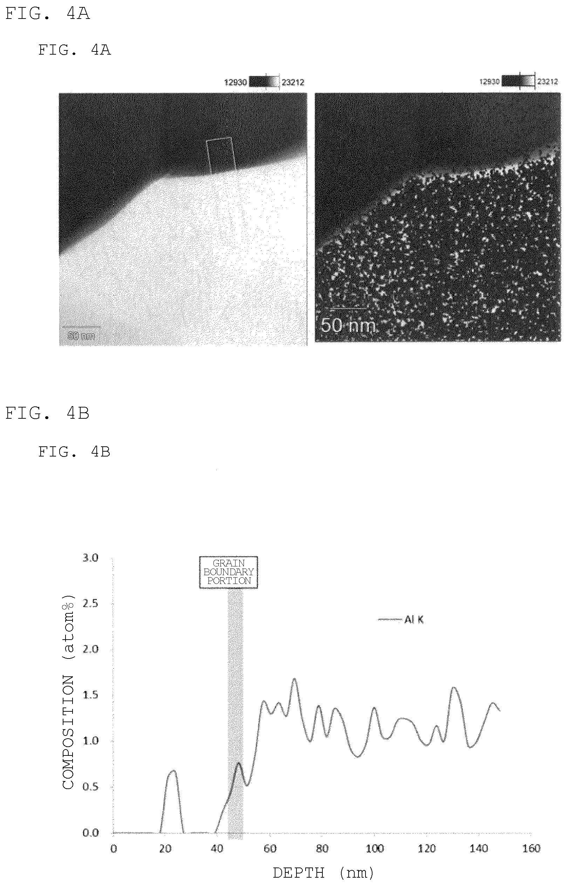

FIG. 4A is a TEM photograph (left side) of the sample of Example 4 in the vicinity of the LCO-LLZ interface and a TEM photograph (right side) showing the Al distribution mapping thereof.

FIG. 4B shows the measurement results when the Al element was measured from the LCO-LLZ interface toward the inside of the LCO in the left-side TEM photograph of FIG. 4A.

(Garnet type crystal structure)

The garnet-type crystal structure was confirmed by obtaining an X-ray diffraction image attributable to a garnet-type similar crystal structure by X-ray diffraction (XRD measurement) (ICDD Card No. 00-045-0109).

[Layered rock salt type crystal structure]

The layered rock salt type crystal structure was confirmed by obtaining an X-ray diffraction image attributable to the layered rock salt type crystal structure by X-ray diffraction (XRD measurement) (ICDD Card No.01-070-2685).

[Chemical composition]

In "Confirmation of elemental distribution", the chemical composition was measured by composition analysis by EDX using TEM-EDX (energy dispersive X-ray spectroscopy).

<Measurement of concentrations of Mg and Al in interface vicinity and inside of particles in positive electrode active material>

The positive electrode layer was cut out in arbitrary two directions by FIB processing, and attention was paid to arbitrary five positive electrode active material particles in each section (TEM sectional view) thereof (10 positive electrode active material particles in total). Subsequently, in each of positive electrode active material particles 1, the chemical composition was determined by TEM-EDX point analysis at arbitrary 10 locations in an interface vicinity 11 with the adjacent garnet type oxide 2, and the concentrations of Mg and Al were obtained. Further, in each of the positive electrode active material particles 1, the chemical composition was determined by TEM-EDX point analysis at arbitrary 10 points in a particle interior 12 located inside the interface vicinity 11 with the adjacent garnet type oxide 2, and the concentrations of Mg and Al were obtained.

<Measurement of content of Al in garnet type oxide>

The garnet type oxide was cut out in any two directions by FIB processing, the chemical composition was obtained by TEM-EDX point analysis at any 30 points in each of the sections (TEM sectional view), the concentrations of Al and La were measured, and the ratio of Al to La was obtained.

[Table 1]

| | Positive electrode active material | | Solid electrolyte (Garnet type oxide) Chemical composition [Al/La ratio] | Positive electrode active material | | | Interface resistance increase rate (%) (3) | Determination | Capacity retention rate (%) (4) | Determination | Comprehensive determination |
|---|---|---|---|---|---|---|---|---|---|---|---|
| | Chemical composition | γ/β | | Interface vicinity Mg/Al concentration $C_K$ (1) | Particle interior Mg/Al concentration $C_N$ (2) | Concentration ratio $C_K/C_N$ | | | | | |
| Comparative Example 1 | LiCoO2 | - | Li6.4La3(Zr1.4Ta0.4Bi0.2)O12 [0] | - | - | - | 25 | △ | 55 | × | × |
| Comparative Example 2 | LiCoFeO2 | - | Li6.4La3(Zr1.4Ta0.4Bi0.2)O12 [0] | - | - | - | 61 | × | 35 | × | × |
| Comparative Example 3 | LiCoSiO2 | - | Li6.4La3(Zr1.4Ta0.4Bi0.2)O12 [0] | - | - | - | 55 | × | 43 | × | × |
| Comparative Example 4 | LiCoO2 | - | (Li6.05Al0.25)La3(Zr1.8Bi0.2)O12 [0.08] | - | - | - | >60 | × | <5 | × | × |
| Comparative Example 5 | LiCo0.99Ti0.01O2 | - | Li6.4La3(Zr1.4Ta0.4Bi0.2)O12 [0] | - | - | - | 42 | × | 50 | × | × |
| Comparative Example 6 | LiCo0.95Al0.05O2 | 0.05 | (Li6.05Al0.25)La3(Zr1.8Bi0.2)O12 [0.08] | - | - | - | 35 | × | 53 | × | × |
| Example 1 | LiCo0.99Mg0.01O2 | 0.01 | Li6.4La3(Zr1.4Ta0.4Bi0.2)O12 [0] | - | - | - | 18 | ○ | 70 | ○ | ○ |
| Example 2 | LiCo0.95Mg0.05O2 | 0.05 | Li6.4La3(Zr1.4Ta0.4Bi0.2)O12 [0] | 0.5 atom% | 2.5 atom% | 0.2 | 15 | ○ | 73 | ○ | ○ |
| Example 3 | LiCo0.98Al0.02O2 | 0.02 | Li6.4La3(Zr1.4Ta0.4Bi0.2)O12 [0] | - | - | - | 10 | ◎ | 75 | ◎ | ◎ |
| Example 4 | LiCo0.95Al0.05O2 | 0.05 | Li6.4La3(Zr1.4Ta0.4Bi0.2)O12 [0] | 0.6 atom% | 1.2 atom% | 0.5 | 7.4 | ◎ | 81 | ◎○ | ◎ |
| Example 5 | LiCo0.9Al0.1O2 | 0.11 | Li6.4La3(Zr1.4Ta0.4Bi0.2)O12 [0] | - | - | - | 15 | ○ | 65 | ○ | ○ |
| Example 6 | LiCo0.98Al0.01Mg0.01O2 | 0.02 | Li6.4La3(Zr1.4Ta0.4Bi0.2)O12 [0] | - | - | - | 5.0 | ◎○ | 82 | ◎○ | ◎○ |

(continued)

| Positive electrode active material | | Solid electrolyte (Garnet type oxide) Chemical composition [Al/La ratio] | Positive electrode active material | | | | | | | Comprehensive determination |
| --- | --- | --- | --- | --- | --- | --- | --- | --- | --- | --- |
| | | | Interface vicinity Mg/Al concentration $C_K$ (1) | Particle interior Mg/Al concentration $C_N$ (2) | Concentration ratio $C_K/C_N$ | Interface resistance increase rate (%) (3) | Determination | Capacity retention rate (%) (4) | Determination | |
| Chemical composition | $\gamma/\beta$ | | | | | | | | | |
| Example 7 | | | | | | | | | | |
| LiCo0.97Al0.01Mg0.01Ti0.01O2 | 0.03 | Li6.4La3(Zr1.4Ta0.4Bi0.2)O12 [0] | - | - | - | 9.0 | ⊙ | 75 | ⊙ | ⊙ |

* The content of the positive electrode active material in the positive electrode layer is 50% by volume in terms of volume ratio.

* Average particle sizes of positive electrode particles and solid electrolyte: 3 μm and 500 nm, respectively

-: not measured, (1) the concentration of Mg or Al in the vicinity of the grain boundary of the positive electrode active material, (2) the concentration of Mg or Al in the inside of the particles of the positive electrode active material, (3) the interface resistance increase rate (%) after 60°C floating, and (4) the capacity retention rate (%) after 60°C floating.

When a high temperature float (60°C) test was performed from Comparative Example 1 using a normal LCO, a remarkable increase in interface resistance and decrease in capacity retention rate were confirmed.

From Examples 1 to 7, it has been found that the inclusion of Al and/or Mg in the LCO has an effect of significantly suppressing the increase in interface resistance and the decrease in capacity retention rate.

However, from Comparative Examples 2, 3, and 5, it has been found that when Fe, Si, and Ti are contained in the LCO, characteristics are rather deteriorated. That is, it has been found that only a specific element is effective for improving the characteristics of the LCO, and the element is Al and/or Mg.

From comparison between Comparative Examples 1 and 4, it has been found that the inclusion of Al in the LLZ deteriorates the above characteristics.

From the comparison between Comparative Example 6 and Example 4, it has been found that when Al is contained in the LCO and Al is contained in LLZ, the effect of the present invention cannot be obtained.

As described above, in order to sufficiently obtain the effect of the present invention, it is necessary that the LLZ does not contain Al and that the LCO contains Al and/or Mg.

INDUSTRIAL APPLICABILITY

The solid-state battery including the solid electrolyte ceramic according to the present invention can be used in various fields where battery use or power storage is assumed. The solid-state battery according to an embodiment of the present invention can be used in the field of electronics mounting, although merely an example. The solid-state battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

DESCRIPTION OF REFERENCE SYMBOLS

    1: Positive electrode active material
    11: Interface vicinity with garnet type oxide in positive electrode active material
    12: Internal region of positive electrode active material (inside of particle)
    2: Garnet type oxide
    S: Interface with garnet type oxide in positive electrode active material

**Claims**

1.  A solid-state battery comprising:

    a positive electrode layer;
    a negative electrode layer; and
    a solid electrolyte layer disposed between the positive electrode layer and the negative electrode layer,
    wherein the positive electrode layer includes a positive electrode active material having a layered rock salt type structure and an oxide having a garnet type structure,
    the positive electrode active material contains at least one of Mg (magnesium) or Al (aluminum), and
    the oxide substantially does not contain Al (aluminum).

2.  The solid-state battery according to claim 1, wherein

    the oxide contains La, and

a content of Al in the oxide with respect to a content of La is less than 0.08.

3. The solid-state battery according to claim 1 or 2,
wherein the positive electrode active material has a chemical composition represented by a following general formula (R):
[Chemical Formula 1]

$$Li_\alpha M1_\beta M2_\gamma O_\omega \qquad (R)$$

wherein M1 is one or more elements selected from the group consisting of Co (cobalt), Ni (nickel), and Mn (manganese),
M2 includes one or more elements selected from the group consisting of Mg (magnesium) and Al (aluminum),
$\alpha$ satisfies $0.8 \leq \alpha \leq 1.5$,
$\beta$ satisfies $0.8 \leq \beta \leq 1.2$,
$\gamma/\beta$ satisfies $0 < \gamma/\beta \leq 0.2$, and
$\omega$ satisfies $1.8 \leq \omega \leq 2.2$.

4. The solid-state battery according to claim 3, wherein

the M2 includes Al, and
a value $\gamma_{Al}$ corresponding to $\gamma$ for Al satisfies $0.008 \leq \gamma_{Al} \leq 0.08$.

5. The solid-state battery according to claim 4, wherein M2 includes only both Mg and Al.

6. The solid-state battery according to any one of claims 1 to 5, wherein

the positive electrode active material has an interface vicinity with the oxide and a particle interior thereof, and
a concentration of at least one of Mg (magnesium) and Al (aluminum) in the particle interior is more than a concentration of the at least one of Mg (magnesium) and Al (aluminum) in the interface vicinity.

7. The solid-state battery according to any one of claims 1 to 5, wherein

the positive electrode active material has the interface vicinity with the oxide and the particle interior thereof, and
a total concentration $C_N$ of Mg (magnesium) and Al (aluminum) in the particle interior is more than a total concentration $C_K$ of Mg (magnesium) and Al (aluminum) in the interface vicinity.

8. The solid-state battery according to claim 7, wherein a concentration ratio ($C_K/C_N$) of the total concentration $C_K$ to the total concentration $C_N$ is 0.01 or more and 0.90 or less.

9. The solid-state battery according to claim 7 or 8,
wherein

the total concentration $C_K$ is 0.1 atom% or more and 2.0 atom% or less, and
the total concentration $C_N$ is 0.8 atom% or more and 5.0 atom% or less.

10. The solid-state battery according to any one of claims 1 to 9, wherein the oxide has a chemical composition represented by a following general formula (I):
[Chemical Formula 2]

$$(Li_{\alpha-p}A_x) (B^I_{\beta-y}B^{II}_y) (D^I_{\gamma-z}D^{II}_z) O_\omega \qquad (I)$$

in which A represents one or more elements that are solid-soluble in a Li site of an oxide having a garnet type crystal structure, and does not contain Al (aluminum),
$B^I$ is one or more elements selected from the group consisting of elements capable of having a trivalent valence among elements belonging to Groups 1 to 3 capable of having an eight-coordination with oxygen,

$B^{II}$ is one or more elements selected from the group consisting of elements capable of having valences other than trivalence among elements belonging to Groups 1 to 3 capable of having eight-coordination with oxygen,

$D^{I}$ is one or more elements selected from the group consisting of elements capable of having tetravalent valence among transition elements capable of having six-coordination with oxygen and typical elements belonging to Groups 12 to 15,

$D^{II}$ is one or more elements selected from the group consisting of elements capable of having valences other than tetravalent among transition elements capable of having six-coordination with oxygen and typical elements belonging to Groups 12 to 15,

$\alpha$ satisfies $5.0 \leq \alpha \leq 8.0$,

$\beta$ satisfies $2.5 \leq \beta \leq 3.5$,

$\gamma$ satisfies $1.5 \leq \gamma \leq 2.5$,

$\omega$ satisfies $11 \leq \omega \leq 13$,

x satisfies $0 \leq x \leq 1.0$,

y satisfies $0 \leq y \leq 1.0$,

z satisfies $0.4 \leq z \leq 2.2$, and

p is calculated by the following formula:

$$p = ax - (3 - b)y + (d - 4)z$$

where a represents an average valence of A, b represents a mean valence of $B^{II}$, and d represents a mean valence of $D^{II}$.

11. The solid-state battery according to claim 10, wherein $D^{II}$ includes Bi (bismuth).

12. The solid-state battery according to claim 1 to 11, wherein the positive electrode layer and the negative electrode layer are layers capable of occluding and releasing or inserting and extracting lithium ions.

13. The solid-state battery according to any one of claims 1 to 11, wherein the solid electrolyte layer is integrally sintered with the positive electrode layer and the negative electrode layer by sintering between sintered bodies.

FIG. 1

FIG. 1

FIG. 2

FIG. 2

For the arc of a circle around 1 kHz, a real part difference between inflection points (saddle points) of a colecole plot is defined as an interface resistance value.

FIG. 3A

FIG. 3A

FIG. 3B

FIG. 3B

FIG. 4A

FIG. 4A

FIG. 4B

FIG. 4B

## INTERNATIONAL SEARCH REPORT

International application No.

**PCT/JP2023/044824**

### A. CLASSIFICATION OF SUBJECT MATTER

*H01M 10/0562*(2010.01)i; *H01M 4/62*(2006.01)i; *H01M 4/131*(2010.01)i; *H01M 4/505*(2010.01)i; *H01M 4/525*(2010.01)i; *H01M 10/052*(2010.01)i; *H01M 10/058*(2010.01)i

FI:  H01M10/0562; H01M4/131; H01M4/62 Z; H01M10/052; H01M4/505; H01M4/525; H01M10/058

According to International Patent Classification (IPC) or to both national classification and IPC

### B. FIELDS SEARCHED

Minimum documentation searched (classification system followed by classification symbols)

H01M10/0562; H01M4/62; H01M4/131; H01M4/505; H01M4/525; H01M10/052; H01M10/058

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-206487 A (TOPPAN PRINTING CO., LTD.) 27 December 2018 (2018-12-27) claims | 1-13 |
| A | JP 2014-096350 A (NGK INSULATORS LTD.) 22 May 2014 (2014-05-22) claims | 1-13 |
| A | JP 2014-096352 A (NGK INSULATORS LTD.) 22 May 2014 (2014-05-22) claims | 1-13 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **21 February 2024** | **05 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/044824**

| Patent document cited in search report | | | Publication date (day/month/year) | Patent family member(s) | Publication date (day/month/year) |
|---|---|---|---|---|---|
| JP | 2018-206487 | A | 27 December 2018 | (Family: none) | |
| JP | 2014-096350 | A | 22 May 2014 | (Family: none) | |
| JP | 2014-096352 | A | 22 May 2014 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 18025649 A
- JP 2021174682 A